# EUROPÄISCHE PATENTANMELDUNG

(11) **EP 1 832 720 A1**
(43) Veröffentlichungstag der Anmeldung: **12.09.2007**
(21) Anmeldenummer: 07003183.6
(22) Anmeldetag: 15.02.2007
(51) Int. Cl.: F01L 1/344, G01B 7/14, G01B 5/14, G01M 15/05, G01M 15/04

(54) **Verfahren zur Bestimmung von Gleitlagerspielen einer Brennkraftmaschine**

(30) Priorität: 10.03.2006 DE 102006011189
(71) Anmelder: Bayerische Motorenwerke Aktiengesellschaft, 80809 München (DE)
(72) Erfinder: Gutzer, Ulrich, Dr., 80797 München (DE)

(57) **Zusammenfassung**

Verfahren zur Bestimmung von Gleitlagerspielen einer Brennkraftmaschine, die eine hydraulische Nockenwellenwinkelverstelleinheit aufweist, die eine Winkellage einer Nockenwelle relativ zu einer Winkellage einer Kurbelwelle um einen definierten Winkel verstellt, wobei eine Verstelldauer einer Nockenwellenverstellung um einen definierten Winkel ermittelt wird.

Mit dem vorgeschlagenen Verfahren kann auf einfache Art und Weise die Summe aller Gleitlagerspiele einer Brennkraftmaschine bestimmt werden.

## Beschreibung

Die Erfindung betrifft ein Verfahren zur Bestimmung von Gleitlagerspielen einer Brennkraftmaschine mit den Merkmalen aus dem Oberbegriff des Patentanspruchs 1.

Sie geht von der deutschen Patentschrift DE 43 40 614 C2 aus. Aus dieser ist eine Vorrichtung zum Verdrehen der Nockenwelle gegenüber der Kurbelwelle in einer Kraftfahrzeug-Brennkraftmaschine bekannt. Mit der vorgeschlagenen Vorrichtung ist es möglich, den Unterschied zwischen einer Soll-Position und einer Ist-Position der Nockenwelle mit Hilfe eines Steuergerätes zu berechnen. Diese Berechnung erfolgt mit Hilfe eines Grundansteuersignals aus einem von der Schmiermitteltemperatur und der Drehzahl der Brennkraftmaschine abhängigen Korrekturwert sowie aus einem Adaptionswert. Dies bedeutet, dass die Abweichung der Ist-Position der Nockenwelle von der Soll-Position von der Schmiermitteltemperatur und somit von dem Schmiermitteldruck und der Drehzahl der Brennkraftmaschine abhängig ist.

Ferner ist es bekannt, dass Gleitlagerspiele in einer Brennkraftmaschine möglichst groß dimensioniert werden, um die innere Reibung der Brennkraftmaschine zur Senkung des Kraftstoffverbrauchs zu minimieren. Jedoch bestimmt der notwendige Schmiermitteldruck im Heißleerlauf die Dimensionierung der Schmiermittelpumpe und somit auch die zulässigen Spiele in den Gleitlagern, z. B. der Grundlager, wie den Kurbelwellenlagern der Brennkraftmaschine. Das bedeutet, je größer die zulässigen Gleitlagerspiele ausgelegt werden, desto größer muss die Schmiermittelpumpe dimensioniert werden, da die Leckagemenge des Schmiermittels größer wird. Die Schmiermittelpumpe muss somit üblicherweise für den ungünstigsten Fall ausgelegt werden, also für eine Brennkraftmaschine mit maximalen in der Fertigung auftretenden Spielen in den Gleitlagern und heißest vorkommendem Schmiermittel. Diese "Über-Dimensionierung" der Schmiermittelpumpe erhöht wiederum den Kraftstoffverbrauch. Da die Summe der Gleitlagerspiele vieler Brennkraftmaschinen aus fertigungstechnischen Gründen eine Gaussverteilung bilden, bestimmt ein winziger Anteil der Brennkraftmaschinen, nämlich diejenigen mit den größten Lagerspielen, die Dimensionierung der Schmiermittelpumpe für die gesamte Brennkraftmaschinenbaureihe. Abhilfe kann eine Erhöhung der Leerlaufdrehzahl für eine Brennkraftmaschine, deren Schmiermitteldruck am untersten zulässigen Wert liegt, sein. Dies erfolgt ab einer bestimmten, möglichst hohen Schmiermitteltemperatur, sonst wird der Einfluss auf den Kraftstoffverbrauch wieder größer. Auch in diesem Fall bestimmen die wenigen, schlechtest zu erwartenden Brennkraftmaschinen in der Fertigung die Dimensionierung der Schmiermittelpumpe. Darüber hinaus bestimmt auch die erforderliche Verstellgeschwindigkeit der Nockenwellenwinkelverstelleinheit den notwendigen Schmiermitteldruck und somit die Dimensionierung der Schmiermittelpumpe, da die Nockenwellenverstellung innerhalb eines definierten Zeitfensters erfolgen muss.

Um den o. g. Zielkonflikt lösen zu können, wäre es wünschenswert, den Ist-Zustand der Gleitlager, d. h. das Spiel der Gleitlager einer Brennkraftmaschine auf einfache Art und Weise bestimmen zu können, da dann eine kleinere Dimensionierung der Schmiermittelpumpe möglich ist.

Aufgabe der vorliegenden Erfindung ist es, ein Verfahren aufzuzeigen, mit dem auf einfache Art und Weise das Gleitlagerspiel in einer Brennkraftmaschine bestimmt werden kann.

Diese Aufgabe wird durch das Merkmal im kennzeichnenden Teil des Patentanspruchs 1 dadurch gelöst, dass die Verstelldauer der Nockenwellenverstellung ermittelt wird.
Mit dem vorgeschlagenen Verfahren kann auf einfachste Art und Weise die Ist-Spielsituation von Gleitlagern in einer Brennkraftmaschine festgestellt werden. Hierzu wird in einfacher Weise die Verstelldauer der Nockenwellenverstellung um einen definierten Winkel ermittelt. Dies kann beispielsweise am Ende einer Fertigungsstrasse für Brennkraftmaschinen durch die Einführung einer zusätzlichen Funktion, z. B. im Kalttest, erfolgen. Unter Kalttest wird die Überprüfung der Funktionsfähigkeit der Brennkraftmaschine verstanden, ohne dass eine Verbrennung stattfindet, d. h. bei dieser Überprüfung wird die Brennkraftmaschine von einem externen Antriebsaggregat angetrieben. Darüber hinaus kann dieses Verfahren auch von Zeit zu Zeit im Kundenbetrieb, beispielsweise während eines Services erfolgen, um den aktuellen Lagerspielzustand zu ermitteln.

Die Verwendung eines Nockenwellenwinkelsensors gemäß Patentanspruch 2 ist besonders vorteilhaft, da üblicherweise ohnehin ein Nockenwellenwinkelsensor in einem gattungsgemäßen Nockenwellenwinkelverstellsystem zur Messung des Verstellwinkels vorhanden ist.

Um eine möglichst exakte Zeitmessung zu erhalten, wird die Verstelldauer gemäß Patentanspruch 3 bei einer definierten Temperatur und einer definierten Drehzahl der Brennkraftmaschine ermittelt.

Es wird ein Verfahren zur Bestimmung von Gleitlagerspielen einer Brennkraftmaschine, die eine hydraulische Nockenwellenwinkelverstelleinheit aufweist, die eine Winkellage einer Nockenwelle relativ zu einer Winkellage einer Kurbelwelle um einen definierten Winkel verstellt, wobei eine Verstelldauer einer Nockenwellenverstellung um einen definierten Winkel ermittelt wird, vorgeschlagen.

Dieses Verfahren zur Ermittlung der Ist-Spielsituation von den Gleitlagern einer Brennkraftmaschine, bzw. zur Ermittlung des Druckaufbaus in einer Nockenwellenwinkelverstelleinheit erlaubt die Einführung einer gezielten Leerlaufdrehzahlerhöhung nur für die wenigen Brennkraftmaschinen, die sie fertigungsbedingt oder laufzeitbedingt aufgrund zu großer Gleitlagerspiele wirklich benötigen, um den benötigten Mindest-Schmiermitteldruck aufbauen zu können. Damit ist eine eventuelle Schädlichkeit des vorgeschlagenen Verfahrens bezüglich Kraftstoffverbrauch der Brennkraftmaschine, mögliche Kundenreaktionen, etc. so stark reduziert, dass in vorteilhafter Weise eine geänderte Auslegung des Schmiermittelkreislaufs, bzw. Dimensionierung der Schmiermittelpumpe möglich ist. Eine kleinere Schmiermittelpumpe in Verbindung mit größeren Lagerspielen reduziert die innere Reibung der Brennkraftmaschine und senkt somit den Kraftstoffverbrauch.

Weiterhin können in vorteilhafter Weise den Schmiermitteldruck beeinflussende Toleranzen, insbesondere in Gleitlagerspielen aufgeweitet werden, wodurch die Fertigungskosten wesentlich reduziert werden. Weiter besteht eine Reaktionsmöglichkeit bei abfallendem Schmiermitteldruck, z. B. bei Lagerspielaufweitung über die Laufzeit, durch einfaches Anheben der Leerlaufdrehzahl. Somit wird die Betriebssicherheit der Brennkraftmaschine wesentlich erhöht und ihre Lebensdauer verlängert.

Die Einführung des erfindungsgemäßen Verfahrens am Fertigungsband für Brennkraftmaschinen stellt eine Qualitätssicherungsmaßnahme dar, um Trends von sich bei der Fertigung einschleichenden Toleranzänderungen, beispielsweise durch die Abnutzung von Schneidwerkzeugen, frühzeitig zu erkennen. Ferner wird es durch die Zusatzinformation des Verfahrens möglich, Brennkraftmaschinen als Grenzmuster bezüglich Reibung im Schmiermittelkreislauf gezielt auszuwählen. Die Trenderkennung erfolgt - wie bereits oben erwähnt - im Rahmen von statistischen Auswertungen, wobei "Ausreißer" frühzeitig und schnell erkannt werden. Mit Kenntnis des Zustandes der Gleitlager der Brennkraftmaschine am Ende des Fertigungsbandes ist somit eine weitere Diagnosemöglichkeit gegeben.

Vorzugsweise wird die Verstelldauer der Nockenwellenwinkelverstelleinheit mit einem ohnehin vorhandenen Nockenwellenwinkelsensor ermittelt. Dadurch fallen keine zusätzlichen Kosten bei der Fertigung der Brennkraftmaschine an. Als Nockenwellenwinkelsensoren können alle heute gebräuchlichen Sensoren verwendet werden, wie z. B. induktive oder kapazitive Sensoren oder auch optische Inkrementenräder.

Um die Vergleichbarkeit der Messergebnisse sicher zu stellen erfolgt die Ermittlung der Verstelldauer vorzugsweise bei einer definierten Temperatur und Drehzahl der Brennkraftmaschine.

## Patentansprüche

1. Verfahren zur Bestimmung von Gleitlagerspielen einer Brennkraftmaschine, die eine hydraulische Nockenwellenwinkelverstelleinheit aufweist, die eine Winkellage einer Nockenwelle relativ zu einer Winkellage einer Kurbelwelle um einen definierten Winkel verstellt,
**dadurch gekennzeichnet, dass** eine Verstelldauer einer Nockenwellenverstellung um einen definierten Winkel ermittelt wird.

2. Verfahren nach Patentanspruch 1,
**dadurch gekennzeichnet, dass** die Verstelldauer mit einem Nockenwellenwinkelsensor ermittelt wird.

3. Verfahren nach Patentanspruch 1 oder 2,
**dadurch gekennzeichnet, dass** die Ermittlung der Verstelldauer bei einer definierten Temperatur und Drehzahl der Brennkraftmaschine erfolgt.
